# EUROPÄISCHE PATENTANMELDUNG

(11) **EP 1 162 115 A1**
(43) Veröffentlichungstag der Anmeldung: **12.12.2001**
(21) Anmeldenummer: 01110101.1
(22) Anmeldetag: 02.05.2001
(51) Int. Cl.: B60R 5/04, B60R 7/02

(54) **Einrichtung zum Transport von Gegenständen in einem Fahrzeug**

(30) Priorität: 30.05.2000 DE 20009661 U
(71) Anmelder: Johnson Controls GmbH, 51399 Burscheid (DE)
(72) Erfinder: Hoge, Ralf, 42477 Radevormwald (DE); Zimmermann, Detlef, 58239 Schwerte (DE)
(74) Vertreter: Patentanwälte Dr. Solf & Zapf

(57) **Zusammenfassung**

Einrichtung zum Transport von Gegenständen in einem Fahrzeug, bestehend aus einem auf einem Laderaumboden (2) des Fahrzeugs zu halternden Aufnahmebehälter (1). Der Aufnahmebehälter (1) besteht aus derart beweglich, zusammenlegbar miteinander verbundenen Behälterteilen, dass er zwischen einem Nichtgebrauchszustand (Fig. 1, 2), in dem die Behälterteile zusammengelegt im wesentlichen flach auf oder in der Ebene des Laderaumbodens (2) liegen, und einem Gebrauchszustand (Fig. 3, 4), in dem die Behälterteile aufgestellt mindestens ein Aufnahmefach (4) bilden, überführbar ist.

## Beschreibung

Die vorliegende Erfindung betrifft eine Einrichtung zum Transport von Gegenständen in einem Fahrzeug, bestehend aus einem auf einem Laderaumboden des Fahrzeugs zu halternden Aufnahmebehälter.

Eine solche Einrichtung ist aus dem DE-GM 298 10 334 bekannt, wobei der im wesentlichen wannenförmige Aufnahmebehälter aus einem rahmenartigen, in dem Fahrzeug befestigbaren Halteteil und mindestens einem von dem Halteteil zur Bildung einer Zugriffsöffnung im Bereich einer fahrzeugseitigen Reserverad-Aufnahme entfernbaren Teilbehälter besteht.

Das DE-GM 298 16 248 beschreibt eine Einrichtung speziell zum Transport eines Fahrrades in einem Fahrzeug. Dazu besteht diese Einrichtung aus einem ortsfest innerhalb des Fahrzeugs befestigbaren Halteteil mit speziell angepaßten Halte- und Fixiermitteln für mindestens ein Fahrrad.

Der vorliegenden Erfindung liegt die Aufgabe zugrunde, eine Transporteinrichtung der genannten Art zu schaffen, die bei gutem Benutzungskomfort eine verbesserte Nutzungsvariabilität sowie eine sichere Unterbringung von nahezu beliebigen zu transportierenden Gegenstände (Ladegut) gewährleistet.

Erfindungsgemäß wird dies durch die Merkmale des Anspruchs 1 bzw. des Anspruchs 2 erreicht. Vorteilhafte Weiterbildungen der Erfindung sind in den abhängigen Unteransprüchen enthalten.

Anhand eines in der Zeichnung veranschaulichten, bevorzugten Ausführungsbeispiels soll die Erfindung genauer erläutert werden. Dabei zeigen:
- Fig.1: eine Einsicht in einen Fahrzeug-Laderaum mit einer erfindungsgemäßen Transporteinrichtung in ihrem Nichtgebrauchszustand,
- Fig. 2: eine Ansicht analog zu Fig. 1 während des Überführens der Transporteinrichtung in einen Gebrauchszustand,
- Fig. 3: die erfindungsgemäße Transporteinrichtung im Gebrauchszustand in einer ersten Position und
- Fig. 4: die Transporteinrichtung in ihrem Gebrauchszustand in einer zweiten möglichen Position innerhalb des Laderaums.

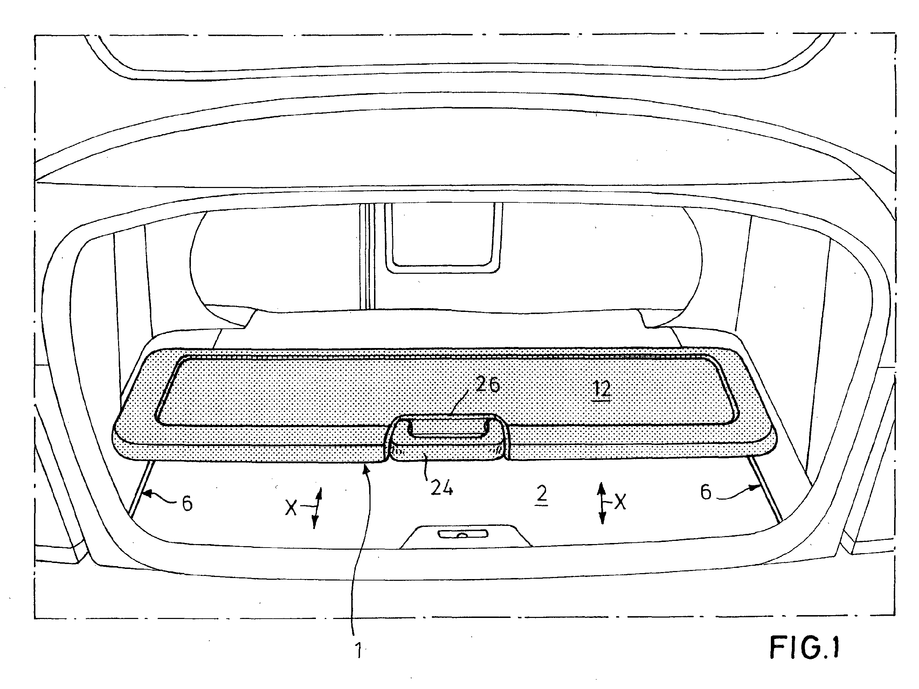

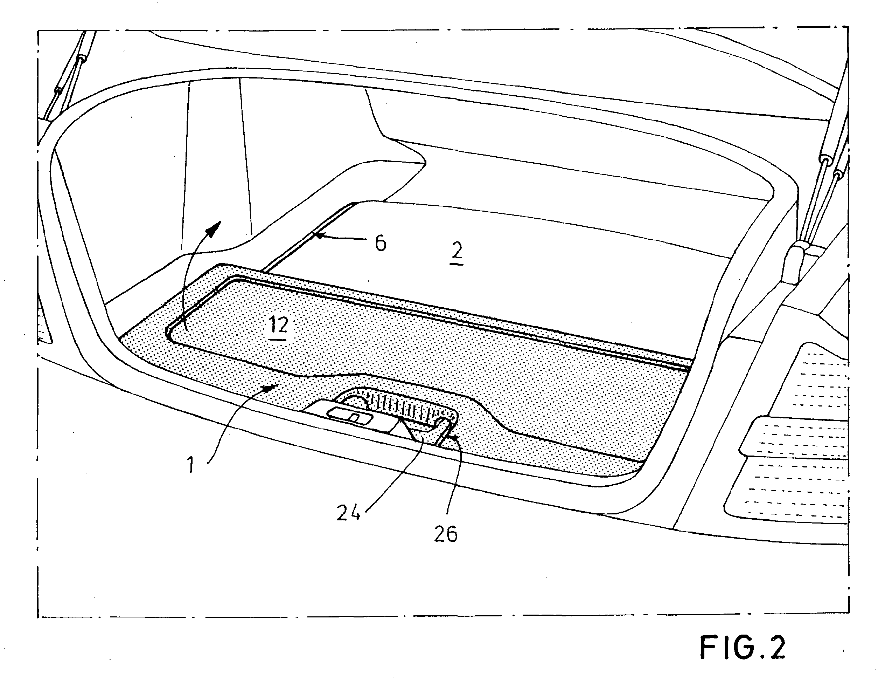

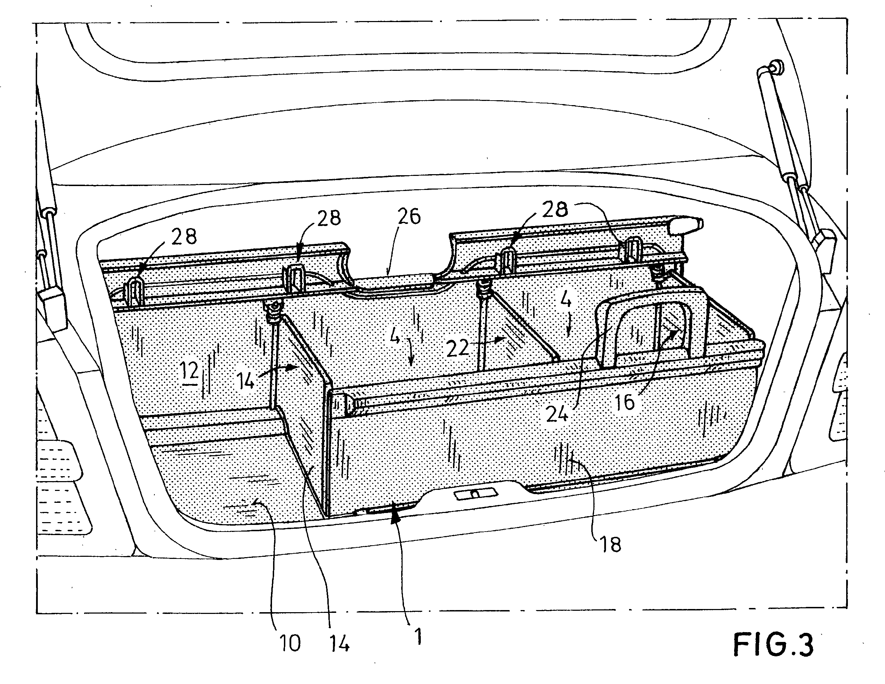

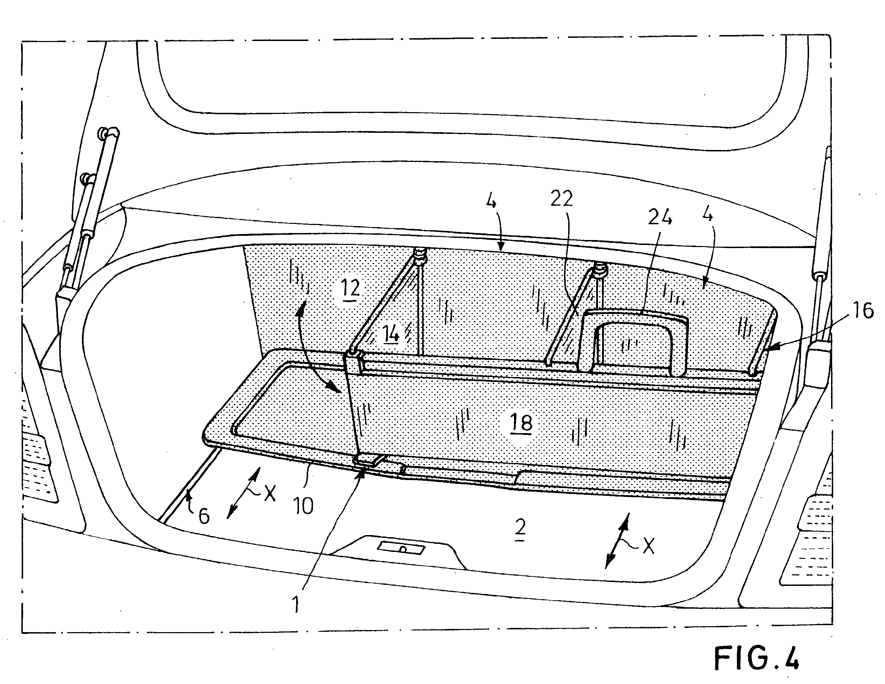

Eine erfindungsgemäße, zum Transport von nahezu beliebigen, nicht dargestellten Gegenständen in einem Fahrzeug vorgesehene Einrichtung besteht aus einem Aufnahmebehälter 1, der auf einem Laderaumboden 2 eines Fahrzeugs gehaltert ist oder wird. Erfindungsgemäß besteht der Aufnahmebehälter 1 aus mehreren, im folgenden noch genauer beschriebenen Behälterteilen, die miteinander derart beweglich, zusammenlegbar verbunden sind, daß der Aufnahmebehälter 1 zwischen einem Nichtgebrauchszustand (Fig. 1 und 2) und einem Gebrauchszustand (Fig. 3 und 4) überführbar ist. In dem Nichtgebrauchszustand liegen die Behälterteile zusammengelegt im wesentlichen flach auf oder in der Ebene des Laderaumbodens 2. In dem Gebrauchszustand bilden die Behälterteile aufgestellt mindestens ein nach oben offenes Aufnahmefach 4.

Vorzugsweise ist der Aufnahmebehälter 1 über Schiebeführungsmittel 6 derart auf dem Laderaumboden 2 gehaltert, daß er - insbesondere in Richtung einer Fahrzeuglängsachse X (vgl. die in Fig. 1 und 4 jeweils eingezeichneten Doppelpfeile)-zwischen zwei Positionen verschiebbar ist. Es handelt sich bevorzugt um eine erste Verschiebeposition, in der sich gemäß Fig. 1 und 4 der Aufnahmebehälter 1 sehr tief innerhalb des Laderaums von einer Laderaumöffnung entfernt, in der Nähe einer Begrenzungswand des Laderaums befindet sowie um eine zweite Verschiebeposition, in der der Aufnahmebehälter 1 sich in der Nähe der Laderaumöffnung befindet (Fig. 2 und 3). Diese Verschiebung ist grundsätzlich wahlweise im Nichtgebrauchszustand oder im Gebrauchszustand des Aufnahmebehälters 1 möglich. Als Schiebeführungsmittel 6 wird bevorzugt ein übliches Schienensystem mit zwei seitlichen, zueinander parallelen Führungsschienen verwendet.

In weiterer vorteilhafter Ausgestaltung der Erfindung sind die Schiebeführungsmittel 6 derart ausgebildet, daß der Aufnahmebehälter 1 in seinem Nichtgebrauchszustand und insbesondere in seiner ersten Verschiebeposition gemäß Fig. 1 in den Laderaumboden 2 so versenkbar ist, daß er mit einer oberen Begrenzungsebene (Oberfläche eines Deckelteils 12) etwa in der Ebene des Laderaumbodens 2 liegt. Diese vorteilhafte Ausgestaltung ermöglicht in dem Nichtgebrauchszustand des Aufnahmebehälters 1 eine ungehinderte, normale Nutzung des gesamten Laderaum, indem Ladegut auch in dem Flächenbereich des Aufnahmebehälters 1 plaziert werden kann.

Zweckmäßigerweise ist der Aufnahmebehälter 1 zumindest in einer, vorzugsweise aber in beiden Verschiebepositionen jeweils über Rastmittel (nicht dargestellt) lösbar fixiert.

In dem dargestellten, bevorzugten Ausführungsbeispiel besteht der Aufnahmebehälter 1 aus einem unteren Bodenteil 10 und einem mit diesem etuiartig klappbar verbundenen Deckelteil 12 sowie ferner mit dem Deckelteil 12 klappbar verbundenen Wandungsteilen 14, 16, 18 und 20. Dabei ist das Deckelteil 12 derart über mindestens zwei seitliche Wandungsteile 14 und 16 mit einem vorderen Wandungsteil 18 gelenkig verbunden, daß durch eine parallelogrammartige Aufklappbewegung die Wandungsteile 14 bis 18 aus ihrer flach aufeinander und auf der Innenseite des Deckelteils 12 liegenden Lage in einen das Aufnahmefach 4 bildenden Zustand überführbar sind (sowie umgekehrt). Das Bodenteil 10 bildet somit zusammen mit dem Deckelteil 12 eine Art Etui, in dem im geschlossenen Nichtgebrauchszustand die übrigen Wandungsteile in einer etwa parallel aufeinanderliegenden Lage untergebracht sind. Im geöffneten, aufgestellten Zustand steht das Deckelteil 12 etwa senkrecht vom Bodenteil 10 hoch, und die Wandungsteile sind vom Deckelteil 12 weg parallelogrammartig schwenkbar zur Bildung des Aufnahmefachs 4. Dabei weist der Aufnahmebehälter 1 vorzugsweise eine längliche, etwa rechteckige Grundform auf, die sich quer zur Fahrzeuglängsachse X und im wesentlichen über die gesamte Breite des Laderaums erstreckt.

Somit wird zum Überführen in den Gebrauchszustand ausgehend vom Nichtgebrauchszustand nach Fig. 1 zunächst der gesamte, flachliegende Aufnahmebehälter 1 in Richtung der Laderaumöffnung gezogen. Dann wird gemäß Fig. 2 und 3 das Deckelteil 12 um etwa 90° nach oben aufgestellt, und es werden die Wandungsteile parallelogrammartig vom Deckelteil 12 in Richtung der Laderaumöffnung bewegt. Im Bedarfsfall kann dann der gesamte, aufgestellte Aufnahmebehälter 1 noch gemäß Fig. 4 von der Laderaumöffnung weg tiefer in den Laderaum zurück verschoben werden. Dies gestattet eine Nutzung des der Laderaumöffnung zugekehrten Bereichs zur Unterbringung größerer Ladegegenstände.

Bevorzugt kann zudem mindestens ein zwischen den seitlichen Wandungsteilen 14, 16 angeordnetes Trennwandungsteil 22 vorgesehen sein. Dieses Trennwandungsteil 22 ist ausschließlich entweder nur mit dem Deckelteil 12 oder nur mit dem vorderen Wandungsteil 18 klappbar verbunden, damit das Aufnahmefach 4 wahlweise unterteilt werden kann, indem das Trennwandungsteil 22 bei aufgestelltem Aufnahmebehälter 1 weggeklappt wird. In seiner unterteilenden Stellung erfolgt zweckmäßigerweise eine Fixierung insbesondere durch geeignete Rastmittel im Bereich seines freien, verschwenkbaren Wandungsrandes.

Es ist weiterhin vorteilhaft, wenn der Aufnahmebehälter 1 in seiner Gesamtheit, also zusammen mit dem Bodenteil 10, zur Freigabe einer fahrzeugseitigen Reserverad-Aufnahme (in der Zeichnung nicht gekennzeichnet) hochklappbar auf dem Fahrzeug-Laderaumboden 2, insbesondere über die Schiebeführungsmittel 6, gehaltert ist.

Weiterhin ist vorteilhafterweise ein Handhabungsgriff 24 vorgesehen, der vorzugsweise an dem vorderen Wandungsteil 18 derart befestigt ist, daß er im Nichtgebrauchszustand im Bereich einer passend ausgebildeten Ausnehmung 26 des Deckelteils 12 liegt (vgl. Fig. 1 und 2). Durch diese vorteilhafte Ausgestaltung ist eine Einhandbedienung in komfortabler Weise möglich, indem der Handhabungsgriff 24 einerseits zum Aufstellen des Deckelteils 12 sowie andererseits auch für die parallelogrammartige Aufstellbewegung der Wandungsteile verwendet werden kann.

Schließlich ist in Fig. 3 noch erkennbar, daß bevorzugt mehrere Hakenelemente 28 insbesondere auf der Innenseite des Deckelteils 12 angeordnet sind, so daß Gegenstände, beispielsweise Einkaufstüten, auch durch Aufhängen fixierbar sind.

Der erfindungsgemäße Aufnahmebehälter 1 kann zudem mit Zusatzeinrichtungen, wie einer integrierten Kühlbox, einem Grillgerät und/oder dergleichen ausgestattet sein.

Durch die Erfindung werden wesentliche Vorteile erreicht: Vereinfachung des Transportes von beliebigen Gegenständen, Gütem usw., Minimierung der Bewegungsmöglichkeiten von Gegenständen bei Beschleunigungen und Verzögerungen des Fahrzeugs, Schutz des Laderaums vor unsauberen Gütem, Optimierung der Zugänglichkeit und Nutzung des Gesamt-Laderaums, Generelle Verbesserung des Ein- und Ausladeverhaltens.

Die Erfindung ist nicht auf die dargestellten und beschriebenen Ausführungsbeispiele beschränkt, sondern umfaßt auch alle im Sinne der Erfindung gleichwirkenden Ausführungen.

## Patentansprüche

1. Einrichtung zum Transport von Gegenständen in einem Fahrzeug, bestehend aus einem auf einem Laderaumboden (2) des Fahrzeugs zu halternden Aufnahmebehälter (1),
**dadurch gekennzeichnet**, d a ß der Aufnahmebehälter (1) aus derart beweglich, zusammenlegbar miteinander verbundenen Behälterteilen besteht, daß er zwischen einem Nichtgebrauchszustand (Fig. 1, 2), in dem die Behälterteile zusammengelegt im wesentlichen flach auf oder in der Ebene des Laderaumbodens (2) liegen, und einem Gebrauchszustand (Fig. 3,4), in dem die Behälterteile aufgestellt mindestens ein Aufnahmefach (4) bilden, überführbar ist.

2. Einrichtung nach Anspruch 1 oder nach dem Oberbegriff des Anspruchs 1,
**dadurch gekennzeichnet, daß** der Aufnahmebehälter (1) über Schiebeführungsmittel (6) derart auf dem Laderaumboden (2) gehaltert ist, daß er -insbesondere in Richtung einer Fahrzeuglängsachse (X)- zwischen zwei Positionen verschiebbar ist.

3. Einrichtung nach Anspruch 2,
**dadurch gekennzeichnet, daß** die Schiebeführungsmittel (6) derart ausgebildet sind, daß der Aufnahmebehälter (1) in seinem Nichtgebrauchszustand in einer der beiden Verschiebepositionen, insbesondere in einer von einer Laderaumöffnung entfernten Position, in den Laderaumboden (2) so versenkbar ist, daß er mit einer oberen Begrenzungsebene etwa in der Ebene des Laderaumbodens (2) liegt.

4. Einrichtung nach Anspruch 2 oder 3,
**dadurch gekennzeichnet, daß** der Aufnahmebehälter (1) in vorzugsweise beiden Verschiebepositionen über Rastmittel lösbar fixiert ist.

5. Einrichtung nach einem der Ansprüche 1 bis 4,
**dadurch gekennzeichnet, daß** der Aufnahmebehälter (1) aus einem unteren Bodenteil (10) und einem mit diesem klappbar verbundenen Deckelteil (12) sowie mit dem Deckelteil (12) klappbar verbundenen Wandungsteilen (14-20) besteht.

6. Einrichtung nach Anspruch 5,
**dadurch gekennzeichnet, daß** das Deckelteil (12) derart über mindestens zwei seitliche Wandungsteile (14, 16) mit einem vorderen Wandungsteil (18) gelenkig verbunden ist, daß durch eine parallelogrammartige Aufklappbewegung die Wandungsteile (14-18) von ihrer flach aufeinanderliegenden Lage in einen das Aufnahmefach (4) bildenden Zustand und umgekehrt überführbar sind.

7. Einrichtung nach Anspruch 6,
**gekennzeichnet durch** mindestens ein zwischen den seitlichen Wandungsteilen (14, 16) angeordnetes, mit dem Deckelteil (12) oder dem vorderen Wandungsteil (18) klappbar verbundenes Trennwandungsteil (22).

8. Einrichtung nach einem der Ansprüche 1 bis 7,
**dadurch gekennzeichnet, daß** der Aufnahmebehälter (1) zur Freigabe einer fahrzeugseitigen Reserverad-Aufnahme hochklappbar auf dem Fahrzeug-Laderaumboden (2) gehaltert ist.

9. Einrichtung nach einem der Ansprüche 1 bis 8,
**gekennzeichnet durch** einen Handhabungsgriff (24), der vorzugsweise an dem vorderen Wandungsteil (18) befestigt ist.

10. Einrichtung nach einem der Ansprüche 1 bis 9,
**gekennzeichnet durch** mindestens ein Hakenelement (28) welches bevorzugt derart angeordnet ist, daß - insbesondere in dem Aufnahmefach (4) befindliche - Gegenstände, beispielsweise Einkaufstüten, **durch** Aufhängen fixierbar sind.
